# EUROPÄISCHE PATENTSCHRIFT

(11) **EP 2 544 933 B1**
(45) Veröffentlichungstag und Bekanntmachung des Hinweises auf die Patenterteilung: **08.05.2019**
(21) Anmeldenummer: 11708434.3
(22) Anmeldetag: 03.03.2011
(51) Int. Cl.: B60T 17/00, B01D 53/26

(54) **LUFTTROCKNERPATRONE UND VERFAHREN ZUM BETREIBEN EINER LUFTTROCKNERPATRONE**
AIR DRYER CARTRIDGE AND METHOD FOR OPERATING AN AIR DRYER CARTRIDGE
CARTOUCHE DE SÉCHEUR D'AIR ET PROCÉDÉ PERMETTANT DE FAIRE FONCTIONNER UNE CARTOUCHE DE SÉCHEUR D'AIR

(30) Priorität: 10.03.2010 DE 102010010882
(43) Veröffentlichungstag der Anmeldung: 16.01.2013
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2011/053140
(87) Internationale Veröffentlichungsnummer: WO 2011/110458

(56) Entgegenhaltungen:
- WO-A1-2009/043427
- DE-A1-102007 046 167
- DE-B3-102005 039 059
- US-A- 6 089 262

## Beschreibung

Die Erfindung betrifft eine Lufttrocknerpatrone für eine Druckluftversorgungsanlage, insbesondere eine Druckluftversorgungsanlage eines Nutzfahrzeugs, mit einer mit einem Trockenmittel gefüllten Trockenmittelbox, wobei die Trockenmittelbox in einer axialen Richtung mit einem Anschlussflansch der Druckluftversorgungsanlage koppelbar ist, wobei an der Trockenmittelbox eine als Rückschlagventil ausgelegte Dichtung angeordnet ist, die im montierten Zustand der Lufttrocknerpatrone zwischen der Trockenmittelbox und dem Anschlussflansch abdichtend wirkt.

Die Erfindung betrifft weiterhin ein Verfahren zum Betreiben einer Lufttrocknerpatrone an einer Druckluftversorgungsanlage, insbesondere eine Druckluftversorgungsanlage eines Nutzfahrzeugs.

Lufttrocknerpatronen werden als Verschleißteile im Rahmen der Druckluftbereitstellung beziehungsweise -aufbereitung für Druckluftversorgungsanlagen, kurz EAC, insbesondere im Nutzfahrzeugbereich benötigt. Dort werden Sie zur Reinigung erzeugter Druckluft von Öl- und Schmutzpartikeln und zur Trocknung der Druckluft eingesetzt.

Um die Haltbarkeit der verwendeten Lufttrocknerpatrone zu erhöhen, verfügen Druckluftversorgungsanlagen gemäß dem Stand der Technik über eine Möglichkeit die Lufttrocknerpatrone durch das kontrollierte Rückströmen bereits aufbereiteter Druckluft zu regenerieren, wobei während einer derartigen Regenerationsphase in der Lufttrocknerpatrone gesammelte Feuchtigkeit und sonstige Verschmutzungen ausgespült werden.

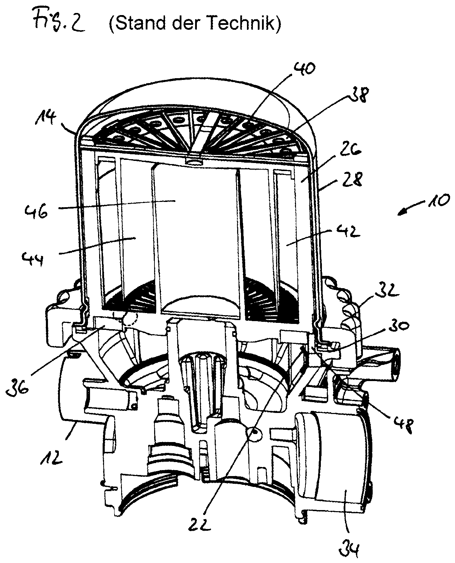

Figur 2 zeigt eine perspektivische Schnittansicht einer entsprechenden Druckluftversorgungsanlage gemäß dem Stand der Technik. Die dargestellte Druckluftversorgungsanlage 10 umfasst ein Ventilgehäuse 12 und eine Lufttrocknerpatrone 14. Die Lufttrocknerpatrone 14 beziehungsweise ein Gehäuse 28 der Lufttrocknerpatrone 14 steht über eine Dichtung 30 direkt mit dem Ventilgehäuse 12 in Verbindung. Von einem Bajonettring 32 wird die auf die Dichtung 30 wirkende abdichtende Kraft zur Verfügung gestellt. Innerhalb des Gehäuses 28 der Lufttrocknerpatrone 14 ist eine Trockenmittelbox 26 angeordnet.

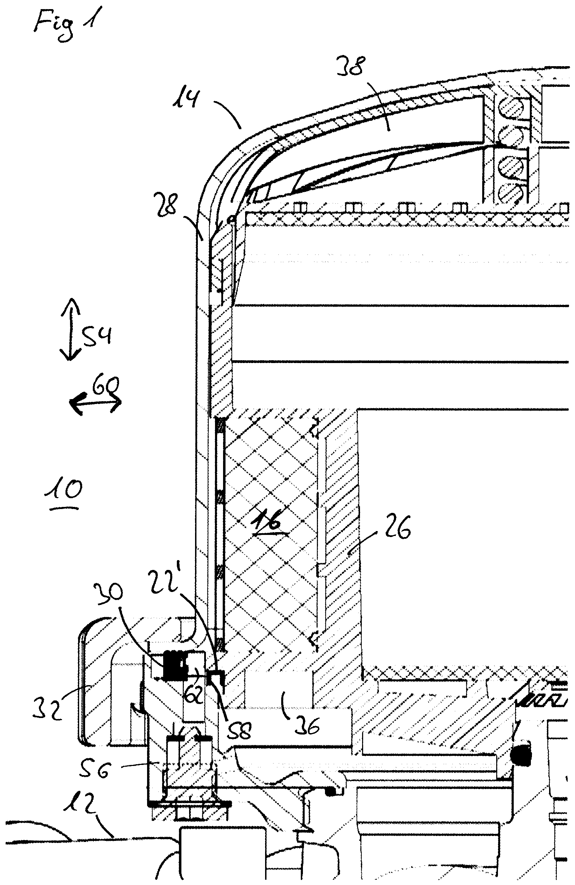

Beim Einsatz der Druckluftversorgungsanlage 10 strömt Druckluft durch einen Eingang 34 des Ventilgehäuses 12 in dieses ein. Die Druckluft wird durch einen Vorfilter 36 geleitet, um nachfolgend in einem Zwischenraum zwischen der Außenseite der Trockenmittelbox 26 und der Innenseite des Gehäuses 28 in einen Freiraum 38 oberhalb der Trockenmittelbox 26 einzuströmen. In der Oberseite der Trockenmittelbox 26 sind eine Vielzahl von Öffnungen 40 vorgesehen, die den Freiraum 38 oberhalb der Trockenmittelbox 26 mit deren Innerem verbinden. Insbesondere strömt die Druckluft aus dem Freiraum 38 über die Öffnungen 40 und einen ersten Labyrinthbereich 42 der Trockenmittelbox 26 in den unteren Bereich der Trockenmittelbox 26, wo die Luft dann umgelenkt wird, um in einen zweiten Labyrinthbereich 44 einzuströmen. Dort nach oben geleitet wird die Druckluft im oberen Bereich wiederum umgelenkt, um dann durch einen zentralen Labyrinthbereich 46 wieder nach unten in Richtung Ventilgehäuse 12 zu strömen. Die getrocknete Druckluft steht somit in den Luftführungen des Ventilgehäuses 12 zur Verfügung, so dass sie von dort den Druckluftverbrauchern zugeführt werden kann. Die Trockenmittelbox 26 ist zum Zwecke der Trocknung der Druckluft mit einem als Trockenmittel wirkendem Granulat gefüllt. Der Vorfilter 36 dient der Reinigung der Druckluft im Hinblick auf gröbere Verschmutzungen. Eine weitere Filtereinrichtung, die in Figur 1 nicht dargestellt ist, ist dem Vorfilter 36 in Strömungsrichtung der Druckluft nachgelagert, um die Druckluft dann auch noch von weiteren Verschmutzungen zu befreien, insbesondere von Öl und dergleichen. Das Öl sammelt sich im Bereich der Lufttrocknerpatrone 14 in einem in Figur 1 nicht dargestellten Sammelkanal an. Von dort kann es bei geeigneten Druckverhältnissen in der Druckluftversorgungsanlage 10 über einen Spülkanal 48 und ein Rückschlagventil 22 in das Ventilgehäuse 12 und von dort zu einem Ablass abströmen. Das Rückschlagventil 22 kann als Membranventil ausgelegt sein, wobei die Membran aus einem Material gefertigt sein sollte, welches den chemischen Belastungen der abzustoßenden Fremdstoffe über einen langen Zeitraum standhält.

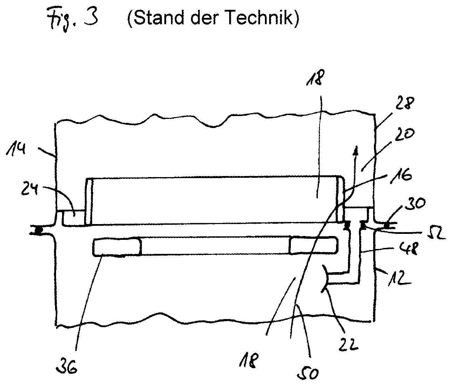

Figur 3 zeigt beispielhaft eine schematische Darstellung einer Schnittstelle zwischen einer Lufttrocknerpatrone 14 und einem Ventilgehäuse 12 einer dem Stand der Technik entnommenen Druckluftversorgungsanlage 10. Hier ist die Anordnung der an der Reinigung der Druckluft sowie dem Ausstoß der fremdpartikelbeteiligten Komponenten schematisch dargestellt. Die Druckluft 50 durchströmt zunächst den Vorfilter 36, um dann im Anschluss die Filtereinrichtung 16 zu durchströmen. Die Filtereinrichtung 16 ist vorzugsweise als Koaleszenzfilter ausgelegt, wobei sich die durch den Koaleszenzfilter 16 abgeschiedenen Fremdpartikel in Strömungsrichtung hinter dem Koaleszenzfilter 16 in einem Sammelkanal 24 ansammeln. Dabei wird der gesamte Bereich, der sich in Strömungsrichtung der Druckluft vor der Filtereinrichtung 16 befindet, als Vorfilterbereich 18 bezeichnet, während der Bereich hinter der Filtereinrichtung 16 als Nachfilterbereich 20 bezeichnet wird. In dem Ventilgehäuse 12 ist ein Spülkanal 48 vorgesehen, der über eine Dichtung mit dem Sammelkanal 24 in Verbindung steht. Das Ende des Spülkanals 48 wird durch ein Rückschlagventil 22 abgedichtet. Dieses verschließt den Spülkanal 48 während der Druckluftförderphase, bei der der Druck im Vorfilterbereich 18 den Druck im Nachfilterbereich 20 in der Regel übersteigt. Wird jedoch ein Ablassventil geöffnet, was zum Druckabfall im Vorfilterbereich 18 führt, so übersteigt der Druck im Nachfilterbereich 20 den Druck im Vorfilterbereich 18. Folglich öffnet das Rückschlagventil 22, wodurch die im Sammelkanal 24 angesammelten Fremdpartikel über das Rückschlagventil 22 ausgestoßen werden. Der Spülkanal 48 kann vollständig im Ventilgehäuse angeordnet sein, wobei der Spülkanal 48 an den Sammelkanal 24 über eine Dichtung 52 anschließt. Wesentlich ist dabei, dass eine druckdichte Verbindung zwischen dem Sammelkanal 24 und dem Ventilgehäuse zur Verfügung gestellt wird, so dass bei entsprechenden Druckverhältnissen der beschriebene Ausstoß von Fremdpartikeln stattfinden kann.

Das Rückschlagventil 22 ist deutlich niedriger angeordnet als der Sammelkanal 24. Auf diese Weise ist auch eine Schiefstellung der Druckluftversorgungseinrichtung erlaubt, ohne dass hierdurch eine vollständige Entleerung des Sammelkanals 24 ausgeschlossen wäre. Insbesondere behindern Neigungen des Fahrzeugs von bis zu 15 Grad eine vollständige Entleerung des Sammelkanals 24 noch nicht.

Die in den Figuren 2 und 3 dargestellte Lufttrocknerpatrone ist ohne eine die Trockenmittelbox in dem Gehäuse fixierende Bodenplatte gefertigt, um das Recyceln der Lufttrocknerpatrone zu erleichtern, da insbesondere ihr Gehäuse direkt wiederverwendet werden kann. Als direkte Folge dieses Aufbaus ist das für die Regeneration notwendige Rückschlagventil aus der Lufttrocknerpatrone in das Innere des Ventilgehäuses versetzt worden. Konstruktionsbedingt nachteilig bei dieser Ausführung ist allerdings, dass das Rückschlagventil nicht mehr gemeinsam mit der Lufttrocknerpatrone ausgetauscht wird und wegen dem andauernden Kontakt mit Schmutz und Ölpartikeln entsprechend robust ausgelegt sein muss, um die Standzeit der übrigen in dem Ventilgehäuse der Druckluftversorgungsanlage angeordneten Komponenten zu erreichen.

Die WO 2009/043427 A1 und die DE 10 2005 039 059 B3 beschreiben Luftfilterpatronen mit einer Bodenplatte, wobei als Rückschlagventil ausgeführte Dichtungen im Inneren der Luftfilterpatrone angeordnet sind.

Aus der DE 10 2007 046 167 A1 ist weiterhin eine Luftfilterpatrone bekannt, bei der eine als Rückschlagventil wirkende Dichtung zwischen einer Trockenmittelbox der Luftfilterpatrone und einem Anschlussflansch des Ventilgehäuses abdichtet.

Der vorliegenden Erfindung liegt dementsprechend die Aufgabe zugrunde, den Fertigungsaufwand zur Herstellung einer Druckluftversorgungsanlage bei gleichzeitig verbesserter Betriebssicherheit dieser Druckluftversorgungsanlage zu reduzieren.

Diese Aufgabe wird mit den Merkmalen der unabhängigen Ansprüche gelöst.

Die Erfindung baut auf der gattungsgemäßen Lufttrocknerpatrone dadurch auf, dass die Dichtung ein u-förmiges Querschnittsprofil mit einer flexiblen Lippe aufweist. Auf diese Weise kann das zur Regeneration notwendige Rückschlagventil gemeinsam mit der Lufttrocknerpatrone getauscht werden. Dabei erweist es sich als besonderer Vorteil, dass das Rückschlagventil als einfache Dichtung ausgeführt sein kann, wobei gleichzeitig die Lufttrocknerpatrone nach wie vor ohne eine begrenzende Bodenklappe auskommt, um eine Wiederverwendung des die Trockenmittelbox aufnehmenden Gehäuses zu ermöglichen.

Erfindungsgemäß ist vorgesehen dass die flexible Lippe der Dichtung in einer radialen Richtung senkrecht zu der axialen Richtung beweglich ist, um die Funktionalität als Rückschlagventil bereitzustellen.

Vorteilhafterweise kann vorgesehen sein, dass die Dichtung senkrecht zu der axialen Richtung eine Ebene definiert und dass ein als Ölsumpf dienender Bereich in dieser Ebene radial beabstandet zu der Dichtung angeordnet ist. Durch diese Konstruktion wird außerhalb einer Regenerationsphase das Rückschlagventil nicht mit den zwischenzeitlich in dem Ölsumpf abgelagerten Schmutzpartikeln belastet.

Weiterhin kann vorgesehen sein, dass der Ölsumpf im Bereich des Anschlussflansches der Druckluftversorgungsanlage angeordnet ist und dass der Ölsumpf im montierten Zustand von der Lufttrocknerpatrone abgedeckt ist. Auf diese Weise wird bei einem Wechsel der Lufttrocknerpatrone ein einfacher Zugriff auf den Ölsumpf möglich, der dementsprechend einfach, zum Beispiel durch einfaches Auswischen, zu reinigen ist.

Die Erfindung besteht weiterhin in einem Verfahren zum Betreiben einer Lufttrocknerpatrone an einer Druckluftversorgungsanlage, insbesondere eine Druckluftversorgungsanlage eines Nutzfahrzeugs, bei dem eine an einer Trockenmittelbox angeordnete Dichtung, die ein u-förmiges Querschnittsprofil mit einer flexiblen Lippe aufweist, wobei die flexible Lippe der Dichtung in einer radialen Richtung senkrecht zu seiner axialen Richtung beweglich ist, um die Funktionalität als Rückschlagventil bereitzustellen, während einer Förderphase der Druckluftversorgungsanlage zwischen der Trockenmittelbox und einem Anschlussflansch der Druckluftversorgungsanlage abdichtend wirkt, und die an der Trockenmittelbox angeordnete Dichtung während einer Spülphase der Druckluftversorgungsanlage zwischen dem Anschlussflansch und der Trockenmittelbox ein kontrolliertes Austreten von Luft ermöglicht. Auf diese Weise werden die Vorteile und Besonderheiten der erfindungsgemäßen Lufttrocknerpatrone auch im Rahmen eines Verfahrens umgesetzt.

Dies gilt auch für die nachfolgend beschriebenen besonders bevorzugten Ausführungsformen des erfindungsgemäßen Verfahrens.

Dieses ist nützlicherweise dadurch weitergebildet, dass die Dichtung das kontrollierte Austreten von Luft in einer radialen Richtung senkrecht zu einer axialen Richtung, in der die Lufttrocknerpatrone mit der Druckluftversorgungsanlage koppelbar ist, erlaubt. Unter dem Austreten von Luft wird dabei ein Entweichen oder ein Übertreten von einem Bereich in einen anderen Bereich über die Dichtung verstanden.

Nützlicherweise kann auch vorgesehen sein, dass bei der Montage der Lufttrocknerpatrone ein im Bereich des Anschlussflansches angeordneter Ölsumpf von der Lufttrocknerpatrone abgedeckt wird.

Die Erfindung wird nun mit Bezug auf die begleitenden Zeichnungen anhand bevorzugter Ausführungsformen beispielhaft erläutert

Es zeigen:
- Figur 1: eine Schnittansicht einer erfindungsgemäßen Lufttrocknerpatrone;
- Figur 2: eine perspektivische Schnittansicht einer Druckluftversorgungseinrichtung mit Lufttrocknerpatrone gemäß dem Stand der Technik;
- Figur 3: eine schematische Darstellung der Schnittstelle zwischen einer Lufttrocknerpatrone und einem Ventilgehäuse einer Druckluftversorgungsanlage gemäß dem Stand der Technik und
- Figur 4: eine Ausschnittsvergrößerung einer Schnittansicht einer erfindungsgemäßen Lufttrocknerpatrone.

Bei der nachfolgenden Beschreibung der Zeichnungen bezeichnen gleiche Bezugszeichen gleiche oder vergleichbare Komponenten.

Figur 1 zeigt eine Schnittansicht einer erfindungsgemäßen Lufttrocknerpatrone. Wegen des im Wesentlichen rotationssymmetrischen Aufbaus der Lufttrocknerpatrone ist nur die linke Hälfte der Patrone dargestellt. Im Gegensatz zu der aus Figur 2 bereits bekannten Lufttrocknerpatrone verfügt die in Figur 1 dargestellte Lufttrocknerpatrone 14, die an einem Ventilgehäuse 12 einer Druckluftversorgungsanlage 10 montiert ist, über eine Dichtung 22', die als ein Rückschlagventil ausgelegt ist. Zu diesem Zweck ist die Dichtung 22' mit einem u-förmigen Profil ausgeführt und umfasst eine flexible Lippe 58, die in einer radialen Richtung 60 senkrecht zu einer axialen Richtung 54, in der die Lufttrocknerpatrone 14 an einem Anschlussflansch 56 des Ventilgehäuses 12 der Druckluftversorgungsanlage 10 montierbar ist, bewegbar ist. Während einer Druckluftförderphase strömt nicht aufbereitete Druckluft über das Vorfilter 36 durch die Filtereinrichtung 16 in die Lufttrocknerpatrone 14, wie bereits im Zusammenhang mit der Figur 2 beschriebenen wurde. Das dabei entstehende Druckgefälle presst das u-förmige Profil der Dichtung 22' in radialer Richtung 60 gegen den Anschlussflansch 56, so dass das durch die Dichtung 22' zwischen der Trockenmittelbox 26 und dem Anschlussflansch 56 realisierte Rückschlagventil geschlossen ist. Die in der Filtereinrichtung 16 abgeschiedenen Öl- und Schmutzpartikel sinken unter dem Einfluss der Schwerkraft auf der dem Gehäuse 28 zugewandten Seite der Filtereinrichtung 16 nach unten und sammeln sich im Bereich eines Ölsumpfes 62, der in der Ebene der Dichtung 22' zwischen der Dichtung 30 und der Dichtung 22' angeordnet ist.

Während einer Regenerationsphase werden die Strömungsverhältnisse im Inneren der Lufttrocknerpatrone 14 umgekehrt, und bereits aufbereitete Druckluft strömt rückwärts durch die Filtereinrichtung 16 und entweicht über einen nicht dargestellten Ausgang aus dem Ventilgehäuse 12, wobei in der Filtereinrichtung 16 vorhandene Öl- und Schmutzpartikel mitgerissen werden. Diese Umkehrung der Luftströmungen bewirkt gleichzeitig, dass die flexible Lippe 58 der Dichtung 22' nicht länger in der radialen Richtung 60 gegen den Anschlussflansch 56 gedrückt wird, so dass die als Rückschlagventil ausgeführte Dichtung 22' öffnet und die in dem Ölsumpf 62 abgelagerten Öl- und Schmutzpartikel unter Umgehung der Filtereinrichtung 16 ebenfalls dem ausströmenden Luftstrom zugeführt werden können.

Wird die Lufttrocknerpatrone 14 nach Entfernen des Bajonettrings 32 von dem Anschlussflansch 56 in axialer Richtung 54 abgehoben, so kann in axialer Richtung 54 direkt auf den Ölsumpf 62 zugegriffen werden, beispielsweise um diesen manuell zu reinigen.

Die Dichtung 22' ist an der Trockenmittelbox 26 befestigt, beispielsweise durch einfaches Aufschnappen. Bei der dargestellten Lufttrocknerpatrone 14 kann die Trockenmittelbox 26 gemeinsam mit der an ihr befestigten Dichtung 22' aus dem Gehäuse 28 entnommen werden, welches direkt wiederverwendet werden kann.

Die Figuren 2 und 3 wurden bereits in der Einleitung beschrieben.

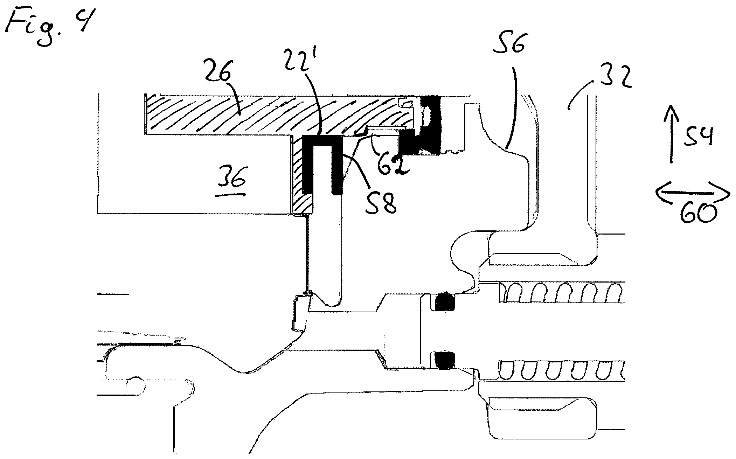

Figur 4 zeigt eine Ausschnittsvergrößerung einer erfindungsgemäßen Lufttrocknerpatrone. In Figur 4 ist der den Ölsumpf 62 umfassende Bereich des Anschlussflansches 56 vergrößert dargestellt. Wie in der Figur 1 ist nur eine Seite des zu der axialen Richtung 54 im Wesentlichen rotationssymmetrisch aufgebauten Anschlussflansches 56 dargestellt. Während einer Druckluftförderphase wird die flexible Lippe 58 der Dichtung 22' aufgrund der herrschenden Druckverhältnisse in der radialen Richtung 60 nach außen, das heißt bezüglich der Figur 4 nach rechts gegen den Anschlussflansch 56 gepresst. Die Dichtung 22' dichtet somit zwischen der Trockenmittelbox 26 und dem Anschlussflansch 56. Während einer Regenerationsphase ändern sich die Druckverhältnisse, so dass die flexible Lippe 58 in der radialen Richtung 60 nach innen gedrückt wird, was bezüglich der Figur 4 einer Auslenkung der flexiblen Lippe 58 nach links entspricht, so dass Druckluft kontrolliert zwischen der Trockenmittelbox und dem Anschlussflansch 56 entweichen kann, wobei in dem Ölsumpf 62 abgelagerte Öl- und Schmutzpartikel mitgerissen werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungsanlage
- 12: Ventilgehäuse
- 14: Lufttrocknerpatrone
- 16: Filtereinrichtung
- 18: Vorfilterbereich
- 20: Nachfilterbereich
- 22: Rückschlagventil
- 22': Dichtung
- 24: Sammelkanal
- 26: Trockenmittelbox
- 28: Gehäuse
- 30: Dichtung
- 32: Bajonettring
- 34: Eingang
- 36: Vorfilter
- 38: Freiraum
- 40: Öffnungen
- 42: erster Labyrinthbereich
- 44: zweiter Labyrinthbereich
- 46: zentraler Labyrinthbereich
- 48: Spülkanal
- 50: Druckluft
- 52: Dichtung
- 54: axiale Richtung
- 56: Anschlussflansch
- 58: flexible Lippe
- 60: radiale Richtung
- 62: Ölsumpf

## Patentansprüche

1. Lufttrocknerpatrone (14) für eine Druckluftversorgungsanlage (10), insbesondere eine Druckluftversorgungsanlage (10) eines Nutzfahrzeugs, mit einer mit einem Trockenmittel gefüllten Trockenmittelbox (26), wobei die Trockenmittelbox (26) in einer axialen Richtung (54) mit einem Anschlussflansch (56) der Druckluftversorgungsanlage (10) koppelbar ist, wobei an der Trockenmittelbox (26) eine als Rückschlagventil ausgelegte Dichtung (22') angeordnet ist, die im montierten Zustand der Lufttrocknerpatrone (14) zwischen der Trockenmittelbox (26) und dem Anschlussflansch (56) abdichtend wirkt, **dadurch gekennzeichnet, dass** die Dichtung (22') ein u-förmiges Querschnittsprofil mit einer flexiblen Lippe (58) aufweist, und dass die flexible Lippe (58) der Dichtung (22') in einer radialen Richtung (60) senkrecht zu der axialen Richtung (54) beweglich ist, um die Funktionalität als Rückschlagventil bereitzustellen.

2. Lufttrocknerpatrone (14) nach Anspruch 1, **dadurch gekennzeichnet, dass** die Dichtung (22') senkrecht zu der axialen Richtung (54) eine Ebene definiert und dass ein als Ölsumpf (62) dienender Bereich in dieser Ebene radial beabstandet zu der Dichtung (22') angeordnet ist.

3. Lufttrocknerpatrone (14) nach Anspruch 2, **dadurch gekennzeichnet, dass** der Ölsumpf (62) im Bereich des Anschlussflansches (56) der Druckluftversorgungsanlage (10) angeordnet ist und dass der Ölsumpf (62) im montierten Zustand von der Lufttrocknerpatrone (14) abgedeckt ist.

4. Verfahren zum Betreiben einer Lufttrocknerpatrone (14) an einer Druckluftversorgungsanlage (10), insbesondere eine Druckluftversorgungsanlage (10) eines Nutzfahrzeugs, bei dem
- eine an einer Trockenmittelbox (26) angeordnete Dichtung (22'), die ein u-förmiges Querschnittsprofil mit einer flexiblen Lippe (58) aufweist, wobei die flexible Lippe (58) der Dichtung (22') in einer radialen Richtung (60) senkrecht zu einer axialen Richtung (54) beweglich ist, um die Funktionalität als Rückschlagventil bereitzustellen, während einer Förderphase der Druckluftversorgungsanlage (10) zwischen der Trockenmittelbox (26) und einem Anschlussflansch (56) der Druckluftversorgungsanlage (10) abdichtend wirkt, und
- die an der Trockenmittelbox (26) angeordnete Dichtung (22') während einer Spülphase der Druckluftversorgungsanlage (10) zwischen dem Anschlussflansch (56) und der Trockenmittelbox (26) ein kontrolliertes Austreten von Luft ermöglicht.

5. Verfahren nach Anspruch 4, **dadurch gekennzeichnet, dass** die Dichtung (22') das kontrollierte Austreten von Luft in einer radialen Richtung (60) senkrecht zu einer axialen Richtung (54), in der die Lufttrocknerpatrone (14) mit der Druckluftversorgungsanlage (10) koppelbar ist, erlaubt.

6. Verfahren nach Anspruch 4 oder 5, **dadurch gekennzeichnet, dass** bei der Montage der Lufttrocknerpatrone (14) ein im Bereich des Anschlussflansches (56) angeordneter Ölsumpf (62) von der Lufttrocknerpatrone (14) abgedeckt wird.

## Claims

1. Air dryer cartridge (14) for a compressed air supply system (10), in particular a compressed air supply system (10) of a commercial vehicle, with a desiccant box (26) filled with a desiccant, the desiccant box (26) being capable of being coupled in an axial direction (54) to a connecting flange (56) of the compressed air supply system (10), there being arranged on the desiccant box (26) a seal (22') which is designed as a non-return valve and which, in the mounted state of the air dryer cartridge (14), exerts a sealing-off action between the desiccant box (26) and the connecting flange (56), **characterised in that** the seal (22') has a U-shaped cross-sectional profile with a flexible lip (58), and **in that** the flexible lip (58) of the seal (22') is movable in a radial direction (60) perpendicular to the axial direction (54), in order to provide functionality as a non-return valve.

2. Air dryer cartridge (14) according to claim 1, **characterised in that** the seal (22') defines a plane perpendicularly to the axial direction (54), and **in that** a region serving as an oil sump (62) is arranged in this plane so as to be spaced apart radially from the seal (22').

3. Air dryer cartridge (14) according to claim 2, **characterised in that** the oil sump (62) is located in the region of the connecting flange (56) of the compressed air supply system (10), and **in that** the oil sump (62) is covered, in the mounted state, by the air dryer cartridge (14).

4. Method for operating an air dryer cartridge (14) on a compressed air supply system (10), in particular a compressed air supply system (10) of a commercial vehicle, in which
- during a delivery phase of the compressed air supply system (10), a seal (22') which is located on a desiccant box (26) and which has a U-shaped cross-sectional profile with a flexible lip (58), wherein the flexible lip (58) of the seal (22') is movable in a radial direction (60) perpendicular to an axial direction (54) in order to provide the functionality as a non-return valve, exerts a sealing-off action between the desiccant box (26) and a connecting flange (56) of the compressed air supply system (10), and
- during a flushing phase of the compressed air supply system (10), the seal (22') located on the desiccant box (26) allows a controlled escape of air between the connecting flange (56) and the desiccant box (26).

5. Method according to claim 4, **characterised in that** the seal (22') allows the controlled escape of air in a radial direction (60) perpendicular to an axial direction (54) in which the air dryer cartridge (14) is capable of being coupled to the compressed air supply system (10).

6. Method according to claim 4 or 5, **characterised in that** during the mounting of the air dryer cartridge (14), an oil sump (62) located in the region of the connecting flange (56) is covered by the air dryer cartridge (14).

## Revendications

1. Cartouche (14) de sécheur d'air pour un système (10) d'alimentation en air comprimé, notamment pour un système (10) d'alimentation en air comprimé d'un véhicule utilitaire, comprenant une boîte (26) d'agent desséchant, emplie d'un agent desséchant, la boîte (26) d'agent desséchant pouvant être adjointe suivant une direction (54) axiale à une bride (56) de raccordement du système (10) d'alimentation en air comprimé, dans laquelle, sur la boîte (26) d'agent desséchant est monté une étanchéité (22'), qui est conçue sous la forme d'un clapet antiretour et qui, lorsque la cartouche (14) de sécheur d'air est à l'état monté entre la boîte (26) d'agent desséchant et la bride (56) de raccordement, agit en assurant de l'étanchéité, **caractérisée en ce que** l'étanchéité (22') a un profil de section transversale en forme de u avec une lèvre (58) souple et **en ce que** la lèvre (58) souple de l'étanchéité (22') est mobile dans une direction (60) radiale perpendiculairement à la direction (54) axiale, afin de mettre à disposition la fonctionnalité du clapet antiretour.

2. Cartouche (14) de sécheur d'air suivant la revendication 1, **caractérisée en ce que** l'étanchéité (22') définit, perpendiculairement à la direction (54) axiale, un plan et **en ce qu'**une partie servant de puisard (62) d'huile est disposée dans ce plan, à distance radialement de l'étanchéité (22').

3. Cartouche (14) de sécheur d'air suivant la revendication 2, **caractérisée en ce que** le puisard (62) d'huile est disposé dans la région de la bride (56) de raccordement du système (10) d'alimentation en air comprimé et **en ce que** le puisard (62) d'huile est, à l'état monté, recouvert par la cartouche (14) de sécheur d'air.

4. Procédé pour faire fonctionner une cartouche (14) de sécheur d'air sur un système (10) d'alimentation en air comprimé, notamment sur un système (10) d'alimentation en air comprimé d'un véhicule utilitaire, dans lequel
- une étanchéité (22'), qui est montée sur une boîte (26) d'agent desséchant et qui a un profil de section transversale en forme de u avec une lèvre (58) souple, la lèvre (58) souple de l'étanchéité (22') étant mobile perpendiculairement à une direction (60) radiale, par rapport à une direction (54) axiale, afin de mettre à disposition la fonctionnalité comme clapet antiretour, agissant pendant une phase de transport du système (10) d'alimentation en air comprimé entre la boîte (26) d'agent desséchant et une bride (56) de raccordement du système (10) d'alimentation en air comprimé, de manière à assurer l'étanchéité et
- l'étanchéité (22'), montée sur la boîte (26) d'agent desséchant, permet, pendant une phase de balayage du système (10) d'alimentation en air comprimé entre la bride (56) de raccordement et la boîte (26) d'agent desséchant, d'avoir une sortie contrôlée de l'air.

5. Procédé suivant la revendication 4, **caractérisé en ce que** l'étanchéité (22') permet la sortie contrôlée de l'air dans une direction (60) radiale, perpendiculairement à une direction (54) axiale, dans laquelle la cartouche (14) de sécheur d'air peut être adjointe au système (10) d'alimentation en air comprimé.

6. Procédé suivant la revendication 4 ou 5, **caractérisé en ce que**, lors du montage de la cartouche (14) de sécheur d'air, on recouvre, de la cartouche (14) de sécheur d'air, un puisard (62) d'huile disposé dans la partie de la bride (56) de raccordement.
